(19) 

**Europäisches Patentamt**
**European Patent Office**
**Office européen des brevets**

(11)  **EP 4 711 821 A1**

(12)  # EUROPEAN PATENT APPLICATION

(43) Date of publication:
**18.03.2026 Bulletin 2026/12**

(21) Application number: **24200620.3**

(22) Date of filing: **16.09.2024**

(51) International Patent Classification (IPC):
**G01S 19/30** $^{(2010.01)}$     **G01S 19/34** $^{(2010.01)}$

(52) Cooperative Patent Classification (CPC):
**G01S 19/34; G01S 19/30;** G01S 19/29

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **u-blox AG**
**8800 Thalwil (CH)**

(72) Inventors:
- **Hartmeier, Thomas**
  **8800 Thalwil (CH)**
- **Lluis Garcia, Robert**
  **8800 Thalwil (CH)**
- **Dumphart, Gregor**
  **8800 Thalwil (CH)**

(74) Representative: **Epping - Hermann - Fischer Patentanwaltsgesellschaft mbH Schloßschmidstraße 5 80639 München (DE)**

(54)  **METHOD FOR RECEIVING AND PROCESSING GLOBAL NAVIGATION SATELLITE SYSTEM SIGNALS**

(57)     A method for receiving and processing GNSS signals is performed by a GNSS receiver featuring a power saving mode. The method comprises, in the power saving mode: receiving and taking a snapshot of a GNSS signal in a duty cycle, wherein the duty cycle is part of a cycle; computing, in the duty cycle, respective correlations between the snapshot and different delays of a PRN code sequence; computing, in the duty cycle, respective frequency spectra of the correlations; estimating, in the duty cycle, a delay and a Doppler shift of the GNSS signal based on the frequency spectra; and reducing power consumption for the rest of the cycle; wherein an accuracy of the estimated delay and the estimated Doppler shift is in a same order of magnitude as an accuracy of a delay and a Doppler shift estimated in a full power mode without reducing power consumption.

**Fig 1**

**Description**

TECHNICAL FIELD

This disclosure relates to a method for receiving and processing global navigation satellite system, GNSS, signals. The disclosure further relates to a GNSS receiver and a terminal device.

BACKGROUND ART

GNSS receivers are widely used with terminal devices to provide positioning information for the terminal devices, such as positions, velocities and navigation, etc. GNSS receivers receive GNSS signals from multiple satellites. By processing GNSS signals, GNSS receivers estimate positions, velocities and time, and may further provide navigation for terminal devices.

The propagation of GNSS signals is subject to various effects such as multipath, Doppler shifts, etc. An accurate estimation of positions and velocities, etc. relies on an accurate estimation of delays and Doppler shifts of received GNSS signals. In conventional GNSS receivers, closed tracking loops, such as delay-locked loops, DLL, phase-locked-loops, PLL, and frequency-locked loops, FLL, are used to estimate delays and Doppler shifts by continuously tracking delays and frequencies of the received GNSS signals.

Nevertheless, GNSS receivers are typically operated with batteries. The estimation of delays and Doppler shifts by closed tracking loops may quickly consume the limited power of a GNSS receiver. In various application scenarios, it is desired to reduce power consumption of a GNSS receiver for longer usage time. Therefore, it remains challenging to reduce power consumption while an accurate estimation of delays and Doppler shifts can be still obtained by a GNSS receiver.

SUMMARY OF INVENTION

An object to be achieved is to provide an improved processing concept for providing accurate estimation of delays and Doppler shifts of GNSS signals with reduced power consumption.

This object is achieved with the subject-matter of the independent claims. Embodiments and developments derive from the dependent claims.

According to the present disclosure, a GNSS receiver performs signal acquisition of a received GNSS signal. After the GNSS signal is acquired, a coarse estimation, such as a coarse range of delays and Doppler shifts of the GNSS signal, is obtained. For example, delays are code phases in pseudorandom noise, PRN, code sequences. A coarse range of delays obtained after signal acquisition may be around $\pm 1$ chip duration of a GNSS signal, e.g., $\pm 1 \mu$s. Pseudoranges calculated using such delays may range between hundreds of meters, e.g., $\pm 150$ meters for a GPS L1 system. After the signal acquisition, the received signal is further processed to obtain finer and more accurate estimation of delays and Doppler shifts.

The improved processing concept is based on the idea that the GNSS receiver operates in a power saving mode. In the power saving mode, the GNSS receiver operates with cycles. Part of a cycle is a duty cycle. In the duty cycle, the GNSS receiver receives and takes a snapshot of a GNSS signal, processes the snapshot and estimates a delay and a Doppler shift of the GNSS signal using the snapshot. In the rest of the cycle, the GNSS receiver reduces power consumption, e.g., by fully or partially shutting down some functionality modules of the GNSS receiver. In this way, the GNSS receiver only uses individual and non-continuous snapshots of GNSS signals to obtain accurate estimation of delays and Doppler shifts.

The estimated delays and Doppler shifts are accurate and can be used to calculate accurate pseudoranges and positions. For example, the estimated delays and Doppler shifts are more accurate than the coarse estimation in the signal acquisition. The estimated Doppler shifts may be obtained within a window of $\pm 4$ Hz, and the estimated delays may be obtained within a window of $\pm 0.5$ chip duration, which may be roughly $\pm 146$ ns. Accurate pseudoranges can be calculated using the estimated delays. For example, a window of calculated pseudoranges may be $\pm 9$ meters in a GPS L1 system, or $\pm 2$ meters in a GPS L5 system.

By means of the improved processing concept, a GNSS receiver does not need to continuously operate with full power consumption. The GNSS receiver can operate in duty cycles and reduce power consumption in the rest of cycles. Continuously receiving, processing or tracking of GNSS signals is no longer required. The estimated delays and Doppler shifts have an accuracy in a same satisfactory level as those obtained by continuously receiving, processing or tracking. The estimated Doppler shifts are obtained within a same window of frequencies as those obtained with full power consumption, and the estimated delays are obtained within a same window of chip durations as those obtained with full power consumption. Hence, an accurate estimation of delays and Doppler shifts of GNSS signals is achieved with reduced power consumption.

According to the present disclosure, the method for receiving and processing GNSS signals is performed by a GNSS receiver featuring a power saving mode. The method comprises, in the power saving mode: receiving and taking a snapshot of a GNSS signal in a duty cycle, wherein a duration of the duty cycle is between 10 milliseconds and 2000 milliseconds, and the duty cycle is part of a cycle; computing, in the duty cycle, respective correlations between the snapshot and different delays of a PRN code sequence; computing, in the duty cycle, respective frequency spectra of the correlations; estimating, in the duty cycle, a delay and a Doppler shift of the GNSS signal based on the frequency spectra; and reducing power consumption for the rest of the cycle.

An accuracy of the estimated delay and the estimated Doppler shift is in a same order of magnitude as an accuracy of a delay and a Doppler shift estimated in a full power mode without reducing power consumption. For example, the accuracy of a delay and a Doppler shift estimated in the power saving mode is as satisfactory as the accuracy of a delay and a Doppler shift estimated in the full power mode. The estimated Doppler shift is obtained within a same window of frequencies as that obtained in the full power mode, and the estimated delay is obtained within a same window of chip durations as that obtained in the full power mode.

Accordingly, an error of the delay and the Doppler shift estimated in the power saving mode is in a same range of that in the full power mode. Statistically measured errors such as standard deviation errors can be used for considering errors in the power saving mode and in the full power mode. For example, a standard deviation error reflects a maximum of errors for 68% of time.

Taking GPS L1C/A system as an example, while an error for the estimated delay in the full power mode may be around 10ns, an error of the estimated delay obtained in the power saving mode may be smaller than 200ns, and the difference of errors between the power saving mode and the full power mode may be smaller than 200ns, or smaller than 100ns, smaller than 50ns, or even smaller than 20ns.

As further examples, under better conditions, e.g., better signal to noise ratio, in an open sky environment (in contrast to a city environment with buildings), using different positioning systems such as Galileo or Beidou systems, or more satellites are visible, the errors are smaller in both the full power mode and the power saving mode. For example, in Galileo E1 or Beidou B1C systems, with better signal to noise ratio, e.g., only with thermal noise, an error for the estimated delay in the full power mode may be smaller than 4ns or even smaller than 3ns, an error of the estimated delay obtained in the power saving mode may be as low as 10ns.

Similarly, while an error for the estimated Doppler shift obtained in the full power mode may be in a range of 1Hz to 0.5Hz, the error for the estimated Doppler shift obtained in the power saving mode may be smaller than 5Hz, or smaller than 2Hz or even smaller than 1Hz.

The differences of accuracy between the power saving mode and the full power mode depend on the length of duty cycles, signal strength of the GNSS signals, etc. Assuming that delays and Doppler shifts estimated in the full power mode are precise, the above differences between the estimation in the power saving mode and that in the full power mode are considered as the errors of the estimation in the power saving mode and accordingly indicate the accuracy of the estimation in the power saving mode.

The delay and the Doppler shift estimated in the power saving mode can be further used in a same way as those estimated in the full power mode, for further calculation of pseudoranges, positions, velocities, etc. Taking GPS L1C/A system as an example, in an open sky environment, errors of pseudoranges calculated using the estimation in the power saving mode may be smaller than 20 meters, smaller than 10 meters, smaller than 5 meters or even smaller than 2 meters. Comparing with known actual positions of devices with GNSS receivers, as an example, an error of positions calculated using the estimation in the full power mode may be 4 meters, while an error of positions calculated using the estimation in the power saving mode may be 8 meters.

Comparing with actual positions of devices, an error of positions calculated using the estimation in the power saving mode may be smaller than 150m, smaller than 10m, smaller than 8m or even smaller than 6m. Comparing with actual positions of devices, an error of positions calculated using the estimation in the power saving mode may only be 200%, 150%, 100% or 50% more than an error of positions calculated using the estimation in the full power mode. The difference of errors of positions calculated in the two modes is smaller with better GNSS signal strength, e.g., when devices are in an open sky environment, or more GNSS satellites are visible by a GNSS receiver. As further examples, in an open sky environment and comparing with actual positions of devices, an error of positions calculated using the estimation in the power saving mode may be 9m while an error of positions calculated using the estimation in the full power mode may be 4m; in a city environment with buildings and comparing with actual positions of devices, an error of positions calculated using the estimation in the power saving mode may be 46m while an error of positions calculated using the estimation in the full power mode may be 17m.

Under other positioning systems such as Galileo, Beidou or GLONASS, etc., the errors and the correspondent accuracy in the full power mode and the power saving mode can have different numbers as described above. Nevertheless, the accuracy of the estimated delay and the estimated Doppler shift is in a same order of magnitude as an accuracy of a delay and a Doppler shift estimated in a full power mode in a same manner as described above for the GPS L1C/A system.

In possible implementations, reducing power consumption may include stopping receiving and taking a snapshot of the GNSS signal, stopping processing snapshots as performed in the duty cycle, and/or stopping estimating delays and Doppler shifts. For reducing power consumption, the GNSS receiver may shut down all or partial of its functionality modules.

In possible implementations, in the full power mode, the GNSS receiver may continuously receive a GNSS signal, process the signal or estimate delay and Doppler shifts of the signal. The GNSS may use a closed phase loop and a closed frequency loop for the estimation. The GNSS receiver may continuously take snapshots of a GNSS signal, process the snapshots and estimate delay and Doppler shifts of the signal.

In some implementations, the cycle is below one second or is a few seconds, and the snapshot and the cycle are set to at least one of: a duration of the snapshot is 200ms; the duty cycle is between 2% and 20% of the cycle; the duty cycle is between 20ms and 500ms. The duration of a snapshot may be the same as the length of a duty cycle. With such lengths of a duty cycle and a snapshot, the GNSS receiver operates with full power consumption in a short period and can reduce power for a longer period. Significant reduction of power consumption is achieved at the GNSS receiver.

In some implementations, the method further comprises estimating at least one of a position, a velocity and a time by using the estimated delay and the estimated Doppler shift. The estimated delay and the estimated Doppler shift is accurate enough for the further estimation of the position, etc. with reduced power consumption at the GNSS receiver.

In some implementations, the method further comprises adjusting the different delays of the PRN code sequence by using the estimated delay; and/or adjusting an output frequency of a local oscillator of the GNSS receiver by using the estimated Doppler shift. In this way, the obtained estimation is further used to improve the reception of GNSS signals.

In some implementations, each correlation comprises a length-$K$ sequence in time domain, and computing the respective frequency spectra of the correlations comprises computing a K-point discrete Fourier transform, DFT, of each correlation. The snapshot is processed in the time domain and in the frequence domain, so that the delay and the Doppler shift can be estimated accurately.

In some implementations, estimating the delay and the Doppler shift of the GNSS signal based on the frequency spectra comprises adjusting phases of the frequency spectra and estimating the delay and the Doppler shift using the adjusted frequency spectra. The computation is lightweight and provides accurate estimation.

In some implementations, estimating the delay and the Doppler shift of the GNSS signal based on the frequency spectra comprises computing the delay by a code phase discriminator and computing the Doppler shift being at a maximum of a curve fitted to one of the frequency spectra. The computation is lightweight and provides accurate estimation.

In some implementations, estimating the delay and the Doppler shift of the GNSS signal based on the frequency spectra comprises computing the delay and the Doppler shift being at a maximum of a two-dimensional graph fitted to the frequency spectra. The computation is lightweight and provides accurate estimation.

In some implementations, where the GNSS receiver further features the full power mode, the method further comprises, in the full power mode, using a closed phase loop and a closed frequency loop to estimate a delay and a Doppler shift. In the full power mode, continuous processing is performed by the GNSS receiver. The GNSS receiver may operate in either the power saving mode or the full power mode, and switch between the modes on demand.

The present disclosure further provides a computer program comprising instructions which, when the program is executed by a GNSS receiver, causes the GNSS receiver to carry out a method according to any one of the implementations described above.

The present disclosure further provides a GNSS receiver. The GNSS receiver comprises a radio frequency, RF, front end, a group of correlators and a processing unit. The GNSS receiver is configured to operate in a power saving mode, wherein in the power saving mode: the RF front end is configured to receive and take a snapshot of a GNSS signal in a duty cycle, wherein a duration of the snapshot is between 10 milliseconds and 2000 milliseconds, and the duty cycle is part of a cycle; the correlators are configured to compute, in the duty cycle, respective correlations between the snapshot with different delays of a PRN code sequence; the processing unit is configured to compute, in the duty cycle, respective frequency spectra of the correlations, and estimate a delay and a Doppler shift of the GNSS signal based on the frequency spectra; and at least one of the RF front end, the group of correlators and the processing unit is further configured to reduce power consumption for the rest of the cycle. An accuracy of the estimated delay and the estimated Doppler shift is in a same order of magnitude as an accuracy of a delay and a Doppler shift estimated in a full power mode in which none of the RF front end, the group of correlators and the processing unit reduces power consumption.

In some implementations, the GNSS receiver further comprises a navigation engine, wherein the navigation engine is configured to estimate at least one of: a position, a velocity and a time using the estimated delay and Doppler shift.

In some implementations, the GNSS receiver is further configured to operate in the full power mode, wherein in the full power mode, the processing unit is configured to use a closed phase loop and a closed frequency loop to estimate a delay and a Doppler shift.

In some implementations, the processing unit is a software-implemented module.

The present disclosure further provides a terminal device comprising a GNSS receiver according to any one of the implementations described above.

BRIEF DESCRIPTION OF DRAWINGS

The improved processing concept will be explained in more detail in the following with the aid of the drawings. Elements and functional blocks having the same or similar function bear the same reference numerals throughout the drawings. Hence their description is not necessarily repeated in the following drawings.
In the drawings:

Figure 1     shows a flowchart of a method for receiving and processing GNSS signals;

Figure 2     shows an example sequence of correlation values;

Figure 3     show an example illustrating values in a two-dimensional matrix; and

Figure 4     shows an example of a GNSS receiver.

DETAILED DESCRIPTION

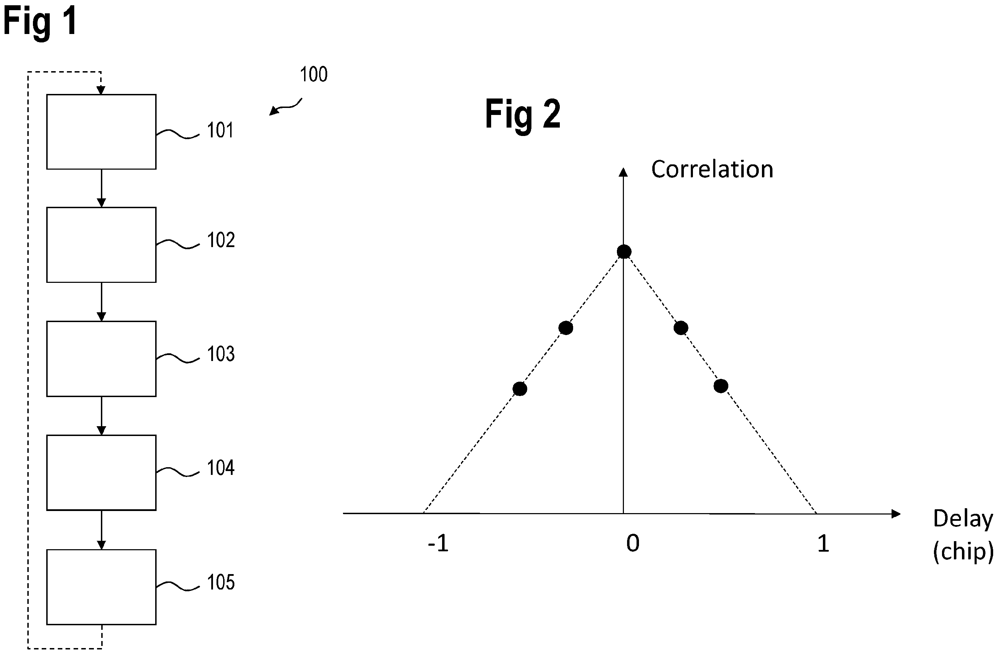

Figure 1 shows a flowchart of an example implementation of a method 100 for receiving and processing GNSS signals.
Method 100 may be performed by one or more modules in a device, such as a GNSS receiver or a terminal device with a GNSS receiver. In the following, a GNSS receiver is used as an example to perform the method.
The GNSS receiver may operate in different power modes, e.g., a full power mode, a power saving mode, etc. In a full power mode, the GNSS receiver may continuously receive a GNSS signal, process the signal or estimate delays and Doppler shifts of the signal. The GNSS may use a closed phase loop and a closed frequency loop for the estimation. The GNSS receiver may continuously take snapshots of a GNSS signal, process the snapshots and estimate delay and Doppler shifts of the signal. In a power saving mode, the GNSS receiver performs steps 101-105 of method 100 to obtain an accurate estimation of delays and Doppler shifts of a GNSS signal.
Before step 101 of method 100, for example, the GNSS receiver performs an initialization of searching and acquiring a GNSS signal. After the initialization, a coarse estimation of delays and Doppler shifts of the GNSS signal is obtained. The GNSS receiver thus has a rough knowledge of a possible range of delays and Doppler shifts of the GNSS signal depending on the coarse estimation and experience.
In step 101 of method 100, the GNSS receiver receives and takes a snapshot of a GNSS signal in a duty cycle. A snapshot is a part of a GNSS signal received for a period of time. The duration of a snapshot may be the same as the length of a duty cycle. A duty cycle is part of a cycle. For example, a cycle may be preset as 1 second and a duty cycle which is a ratio of time in the complete cycle with full operation of the GNSS receiver may be preset as 20%. In this case, the GNSS receiver may process a snapshot of 200ms, and may not perform any receiving and processing for 800ms. A duration of a duty cycle and correspondently a duration of a snapshot may be adapted to requirements of signal accumulation given a current signal strength. Better power saving is achieved at the GNSS receiver by using a smaller duty cycle.
A duty cycle may be in a range between 1% and 90% of a cycle. For example, a duty cycle may be only 1% or 2% of a cycle, or 10%, 20%, 50% or 80% of a cycle. A cycle may be set to a few seconds. A cycle may be below 1 second, such as hundreds of milliseconds. The duration of a duty cycle, which can be the same as the duration of a snapshot, may be between 10ms and 2 seconds. For example, the duration of a snapshot may be set below 2 seconds, below 1 second, below 500ms, below 200ms, or below 100ms. The duration of a snapshot may be set as low as 500ms, 200ms, 100ms, 50ms or 20ms.
In step 102 of method 100, the GNSS receiver computes, in the duty cycle, respective correlations between the snapshot taken in step 101 and different delays of a PRN code sequence.
In an example embodiment, the GNSS receiver has a plurality of correlators. A correlator performs correlation operations. For example, it computes inner product of two inputs. For performing step 102, the snapshot of the received GNSS signal is a first input of each correlator. The input snapshot may be a digital signal which is converted from the received analog signal and its frequency is converted to an intermediate band or a base band. The other input of each correlator is PRN code sequence. The PRN code sequence is a known PRN code sequence that is used by the received GNSS signal. Each correlator is input with the same PRN code sequence with a different delay. A different delay is a different code phase of the same PRN code sequence.
For example, the GNSS receiver uses $N$ correlators, and the $N$ correlators apply the same PRN code sequence with $N$ respective delays to compute correlations with the snapshot. $N$ may be equal to or greater than 2. For example, $N$ may be equal to or greater than 7. A greater number of $N$ improves accuracy of estimation in high dynamical scenarios, under multipath interference, or limited signal bandwidth scenarios. A greater number of $N$ may also allow faster convergence after signal acquisition and for avoiding problems with binary offset carrier, BOC, side peaks.

The different delays applied by the correlators have finer ranges compared with those used in search and acquisition procedures for receiving GNSS signals. For example, the different delays applied by the correlators are selected within $\pm 1$ chip duration of the PRN code sequence used by the received GNSS signal. The different delays can be fractions of a chip duration of the PRN code sequence. Depending on PRN code sequences used in different GNSS systems, a chip duration is the reciprocal of the GNSS signal chipping rate with the example values 511 kHz (GLONASS L1), 1023 kHz (GPS L1C/A), or 10230 kHz (GPS L5). A spacing between different delays may be set to a same value, e.g., 1/8, 1/16 or 1/32 of a chip duration. For GPS L1C/A system, a correspondent spacing would be 122, 61 or 31 ns. Different delays can be calculated by using the spacing value and the chip duration. Thus, compared with signal acquisition which obtains a coarse delay range about $\pm 1$ chip duration, e.g., $\pm 1$ us, and resulting pseudoranges may range between hundreds of meters, delays used by the correlators in step 102 have much finer ranges.

For computing correlations, the correlators perform correlation operations at discrete sampling time points. The sampling frequency used by the correlators may be much lower than the frequency of the input snapshot. For example, 1kHz of the correlators can be used for a 32MHz or a 64MHz signal, due to despreading. This allows subsequent processing of outputs of the correlators to be carried out by software implementations. By performing correlation operations at sampling time points, each correlator outputs a sequence of correlation values between the input snapshot and the PRN code sequence with a respective delay. For example, for the input snapshot, each correlator performs correlation operation at $K$ sampling time points during the period of the snapshot. Each output sequence thus has $K$ correlation values. Assuming that a sampling interval of each correlator is $T_S$, a sampling rate of each correlator is correspondently $F_S = 1/T_S$, a duration of an input snapshot is T, the number of $K$ is then $T/T_S = T \cdot F_S$. As an example, a duration of an input snapshot may be 200ms, the correlators apply a sampling rate of 1kHz. There are thus 200 sample time points during the period of this snapshot. Each output sequence thus has 200 correlation values. The sampling rate may be smaller than 1kHz, such as 500Hz, or greater than 1kHz, such as 2kHz. A higher number of $K$ results in smaller spacing between frequency bins after DFT performed in step 102.

Figure 2 shows an example sequence of output correlation values. In this figure, five correlation values output by five correlators at a same sampling time point are shown. The five correlators apply different delays within $\pm 1$ chip duration of a received GNSS signal. Among the five correlators, the correlator applying a delay that is closest to the received GNSS signal outputs the highest correlation value, which is the peak in the figure. It thus can be seen that, the delay corresponding to the peak correlation value is closest to that of the received GNSS signal among all the delays applied by the correlators.

In Figure 2, the delays applied by the correlators are distributed within $\pm 1$ chip duration of the received GNSS signal with spacing between each other. A delay may be denoted as a delay tap, or a tap. A delay tap refers to a delay having one spacing value, two delay taps refer to a delay having two spacing values, and so on. In this way, $N$ different delays used by $N$ correlators can be conveniently represented by $N$ delay taps.

Referring back to Figure 1, in step 102, the GNSS receiver may obtain respective output sequences from $N$ correlators for the snapshot of the received GNSS signal. Each output sequence has $K$ correlation values that are computed at $K$ sampling time points within the duration of the snapshot. The $N$ correlators apply a same PRN code sequence with $N$ respective delays, and the PRN code sequence is used by the received GNSS signal. The GNSS receiver thus obtains the correlations, which are the $N$ output sequences with $K$ values per sequence.

In some implementations, the values in the output sequences are complex values that have in-phase and quadrature components. For example, the snapshot input to the correlators contains complex values, and the correlators perform correlation operations with complex values.

In step 103 of method 100, the GNSS receiver computes, in the duty cycle, respective frequency spectra of the correlations obtained in step 102.

For example, after obtaining the $N$ output sequences with $K$ values per sequence from $N$ correlators in the previous step, the GNSS receiver computes a respective frequency spectrum for each output sequence obtained by computing a $K$-point DFT of the output sequence. As each output sequence has $K$ values in the time domain, a $K$-point DFT computation converts the sequence into a spectrum with $K$ frequency components in the frequency domain. The amplitudes in the spectrum reflect correlation at the frequency components. The GNSS receiver thus obtains $N$ frequency spectra with $K$ values per spectrum.

The frequency components are distributed in a frequency window with certain spacing values between each other. The frequency differences among the frequency components are considered as possible Doppler shifts in the received GNSS signal. The frequency differences may be denoted as frequency bins. One frequency bin refers to a frequency difference with one spacing value, two frequency bins refer to a frequency difference with two spacing values, and so on. In this way, frequency differences are conveniently represented by frequency bins.

In an example embodiment, parameters in the DFT computation can be configured to adjust the resulting frequency spectra. Twiddle factors and the number of frequency components for the DFT can be configured to adjust the frequency spectrum. For example, the chosen twiddle factors in DFT may impact the number of frequency bins and the resulting frequency window within which the frequency components are distributed. The number of frequency bins may be adjusted to be other than the number $K$ of the sampling times. In such implementations, a number $K'$ of frequency bins greater than $K$ can be obtained, and each of the frequency spectra thus contains $K'$ values. The frequency window is considered as a possible range to estimate Doppler shifts. The size of the frequency window would thus impact the possible range to estimate Doppler shifts. The frequency window is thus referred as a Doppler shift window. The Twiddle factors in DFT may be configured to adjust the size of the resulting frequency window. Furthermore, different application scenarios of GNSS receivers, such as in automotive driving, aviation, or in wearable devices, may have different dynamics of movements, velocities, etc. Doppler shifts may have different dynamics in different application scenarios, and a possible range of Doppler shifts may vary in different application scenarios. Twiddle factors in DFT may be configured based on application scenarios.

In some implementations, the values in the frequency spectra are complex values that have in-phase and quadrature components. For example, the values in the sequences output from the correlators are complex values. The DFT computation is performed with complex values.

In an example embodiment, the $N$ frequency spectra with $K$ values per spectrum may be directly represented as a $N \times K$ matrix for further processing. For example, values in the $N$ frequency spectra may be denoted as $z[n,k]$, which are represented as values in a two-dimensional matrix, $n \in [1,N]$, $k \in [1, K]$, wherein $n$ is an index of a frequency spectrum corresponding to a correlator and a delay tap, k is an index of a frequency component corresponding to a frequency bin. A value in the matrix at (n,fc) is a value reflecting correlation at $n^{th}$ delay tap and $k^{th}$ frequency bin. When a number $K'$ of frequency bins greater than $K$ can be obtained and each frequency spectrum has $K'$ values as described above, same implementations for $K$ can be applied to $K'$ and a matrix of $N \times K'$ is obtained for further processing.

In a further example embodiment, values in the $N$ frequency spectra are complex values that have in-phase and quadrature components. The complex values may be processed to obtain a real-valued $N \times K$ matrix for further processing. For example, each complex value $z[n,k]$ is converted to its absolute value $|z[n,k]|$. The $N \times K$ matrix then contains only real values, which are the absolute values of the $N$ frequency spectra.

Alternatively, each complex value is processed using a reference value.

The reference value may be selected based on absolute values of the complex values in the $N$ frequency spectra. For example, the reference value is selected to be the one which has the largest absolute value in the $N$ frequency spectra. Alternatively, a subset of values which have absolute values higher than a threshold is selected from values in the $N$ frequency spectra. The reference value is selected from the subset to be the one which corresponds to the smallest delay in the subset, that is, the one corresponds to the smallest delay tap. In either example, the selected reference value can be denoted as $z_{ref}$, and its index can be denoted as $(n_{ref}, k_{ref})$.

Each complex value in the $N$ frequency spectra can be processed using the selected reference value and the $N \times K$ matrix can be obtained to contain the processed values. For example, a unit complex value $u$ of the selected reference value $z_{ref}$ may be computed by:

$$u = \frac{z_{ref}}{|z_{ref}|} ,$$

wherein $|z_{ref}|$ is an absolute value of $z_{ref}$. Afterwards, each complex value $z[n,k]$ is converted to be the in-phase component of a multiplication of $(z[n,k]u^*)$, wherein $u^*$ is a complex conjugate of the unit complex value $u$. In multipath scenarios which are common for GNSS systems, the selected reference value is considered corresponding to a line-of-sight, LOS, component in the GNSS signal. The selected reference value represents the amplitude of a signal component in the LOS path. By the above computation using the unit complex value $u$ of the reference value, phases of the complex values are adjusted by using the phase of the reference value. Non-line-of-sight, NLOS, components in the GNSS signal can be suppressed. Subsequent estimation using the adjusted values is more accurate. Furthermore, this enlarges the linear region of the correlation function in the case of GNSS signals that use BOC modulation, thus alleviating problems the BOG correlation side peaks may cause during estimation.

After this processing, each $z[n,k]$ is processed and converted to a real value and the real value is put in the $N \times K$ matrix at its correspondent index $(n, k')$. The $N \times K$ matrix then contains only real values, which are the in-phase components of the multiplications. The real-valued $N \times K$ matrix can be used in further processing steps.

In step 104 of method 100, the GNSS receiver estimates, in the duty cycle, a delay and a Doppler shift of the GNSS signal based on the frequency spectra obtained in step 103.

For example, the frequency spectra are represented as a $N \times K$ matrix and a real-valued $N \times K$ matrix is obtained as described above to be used in the following processing. The GNSS receiver estimates a delay and a Doppler shift of the GNSS signal based on the real-valued $N \times K$ matrix.

In example embodiments, the GNSS receiver estimates a delay and a Doppler shift of the received GNSS signal using indices of at least one peak value in the $N \times K$ matrix. A peak value may be a peak in a fitted curve or graph using the $N \times K$ matrix. The $N \times K$ matrix has two dimensions. One of the two dimensions is a delay dimension in which indices correspond to the $N$ different delays. The other dimension is a Doppler shift dimension in which indices correspond to $K$ different Doppler shifts. The estimated delay and Doppler shift are interpolated values between the indices in the respective dimensions. Therefore, by using indices of peak values in the matrix, delays and Doppler shifts can be estimated. The estimation is accurate and comparable with that by conventional tracking loops using continuous snapshots. Determining the at least one peak value depends on which approach is applied in the following.

In an example embodiment, the delay and the Doppler shift are estimated separately while both using the reference value $z_{ref}$ and its index ($n_{ref}$, $k_{ref}$) as described above. The reference value may be selected using any implementation as described above in step 103. For example, the delay is computed by a code phase discriminator using a subset of values in the matrix, wherein the subset comprises the values having a same index $k$ of a reference value selected based on absolute values in the $N \times K$ matrix; and fitting a subset of values in the matrix to a polynomial curve or any other applicable spectrum template and computing the Doppler shift at a maximum of the curve, wherein the subset comprises the values having a same index $n$ of the reference value.

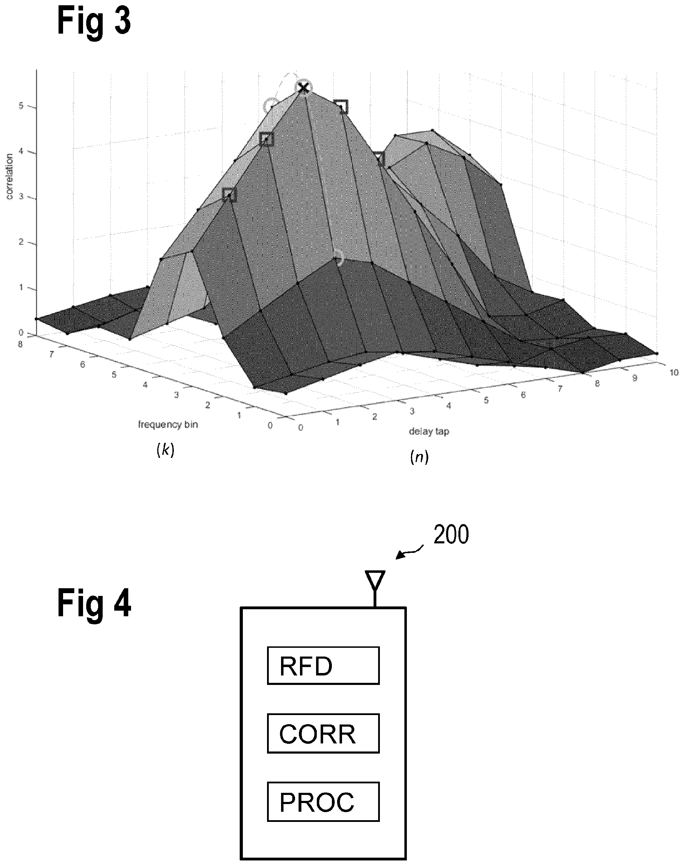

Figure 3 shows an example illustrating values in a two-dimensional matrix. Real values in a $N \times K$ matrix are depicted at their respective indices ($n, k$). One axis in the figure is in a delay dimension, and each index $n$ is shown in the axis of the delay dimension. As described above, different delays used by the $N$ correlators can be represented by different delay taps. An index $n$ corresponds to a delay tap and thus corresponds to a delay value used by a correlator. Another axis in the figure is in a frequency dimension, and each index $k$ is shown in the axis of the frequency dimension. As described above, frequency differences can be represented by frequency bins. An index $k$ corresponds to a frequency bin and thus corresponds to a frequency difference. The frequency dimension may be also referred as a Doppler shift dimension, as the frequency differences may be possible Doppler shifts. Values in the matrix are depicted as amplitudes at ($n, k$) in the figure. The amplitudes reflect correlation at $n^{th}$ delay tap and $k^{th}$ frequency bin.

In the example shown in Figure 3, the value at (3,3) marked with a cross is shown as a selected reference value. The reference value may be selected as described above in step 103. The reference value may be used for estimating the delay and the Doppler shift separately.

Referring back to Figure 1, for estimating the delay, a first subset of values in the matrix is selected. The first subset comprises the values having a same index $k_{ref}$ of the reference value $z_{ref}$. The first subset thus comprises values $z[n,k]$ at index $k = k_{ref}$ and $n \in [1, N]$. These values in the first subset correspond to different delay taps at a same frequency bin. In the example shown in Figure 3, a first subset of values at $k = 3$, such as (2,3), (3,3) and (4,3) marked in squares, may be selected.

Using values in the first subset, a code phase discriminator is applied to compute the delay. For example, an early-late-gate discriminator may be used as defined in the following:

$$\widehat{D} = \mathrm{G} \cdot \left( z\left[n_{ref} + 1, k_{ref}\right] - z\left[n_{ref} - 1, k_{ref}\right] \right),$$

or a double-delta multi-gate discriminator may be used as defined in the following:

$$\widehat{D} = \mathrm{G} \cdot \left( z\left[n_{ref} + 1, k_{ref}\right] - z\left[n_{ref} - 1, k_{ref}\right] - \left( z\left[n_{ref} + 2, k_{ref}\right] - z\left[n_{ref} - 2, k_{ref}\right] \right) / 2 \right),$$

wherein G is a gain factor that is tuned to the modulation used in the GNSS signal. For example, G needs to be larger for BOC modulated Galileo E1 signals than for binary phase shift keying, BPSK, modulated GPS L1C/A signals. The code phase discriminator outputs the estimated delay. Different types of code phase discriminators may be applied to compute the delay.

In an example embodiment, the delay is estimated separately based on an early-late gate discriminator $D$ that is the difference between the matrix values at ($n_{ref} - 1, k_{ref}$) and at ($n_{ref} + 1, k_{ref}$), and the estimated delay in relation to $n_{ref}$ is then computed as $D \cdot T_{chip}/A_{ref}$ where $T_{chip}$ is the chip duration of the GNSS signal and $A_{ref}$ is the matrix value at ($n_{ref}, k_{ref}$).

In an example embodiment, the delay is estimated separately based on a multi-gate discriminator value $D_0$ computed from taps ($n_{ref} + x, k_{ref}$) neighboring the reference tap $n_{ref}$, e.g. the double delta discriminator computed for $x \in \{-2,-1,1,2\}$, to then compute the estimated delay as $g^{-1}(D_0)$ where the function $g$ is a pre-trained non-linearity reflecting discriminator value $D_0$ versus delay for the given signal modulation and signal bandwidth.

In an example embodiment, the delay is estimated separately based on three multi-gate discriminator values $D_{-1}, D_0, D_1$, e.g. of the double delta kind, computed in reference to the matrix values neighboring ($n_{ref} - 1, k_{ref}$), ($n_{ref}, k_{ref}$), ($n_{ref} + 1, k_{ref}$), respectively, and by then computing the estimated delay with linear interpolation at the position of the zero-crossing between either $D_{-1}, D_0$ or $D_0, D_1$, depending on which pair of $D_{-1}, D_0, D_1$ exhibits opposite signs.

For estimating the Doppler shift, a second subset of values in the matrix is selected. The second subset comprises the values having a same index $n_{ref}$ of the reference value $z_{ref}$. The second subset thus comprises values $z[n, k]$ at index $n = n_{ref}$ and $k \in [1, K]$. These values in the second subset correspond to different frequency bins at a same delay tap. In the example shown in Figure 3, a second subset of values at n = 3, such as (3,2), (3,3) and (3,4) marked in circles, etc., may be selected.

Using values in the second subset, a curve can be fitted and a peak can be found on the fitted curve. The frequency value corresponding to the position of the peak at the axis of the Doppler shift dimension is the estimated Doppler shift. For example, the Doppler shift is estimated separately, in relation to the frequency associated with $k_{ref}$, based on the calculated position of the peak of a parabola fitted through the matrix values at $(n_{ref}, k_{ref}-1)$, $(n_{ref}, k_{ref})$, and $(n_{ref}, k_{ref}+1)$. In the example shown in Figure 3, a dotted line is shown which is a curve fitted to values at (3,2), (3,3) and (3,4). A peak can be found on the dotted curve. The peak is at a position between frequency bin 3 and 4 in the Doppler shift dimension. The frequency value corresponding to the precise position in the Doppler shift dimension is the estimated Doppler shift.

In another example embodiment, the delay and the Doppler shift are estimated together by using a two-dimensional fitting algorithm. Values in the $N \times K$ matrix are fitted, partially or completely, to a graph in a delay dimension and a Doppler shift dimension using a two-dimensional fitting algorithm, and the delay and the Doppler shift are computed at a peak in the graph.

In such implementations, values in the two-dimensional $N \times K$ matrix are amplitudes of a three-dimensional graph to be fitted to. Similar as in Figure 3, two dimensions of the graph are the delay dimension and the Doppler shift dimension of the $N \times K$ matrix, where the values in the matrix are positioned in the graph. The values are in the third dimension of the graph as amplitudes to be fitted to (the fitted graph is shown in Figure 3). A multitude of known suitable two-dimensional fitting algorithm may be used. A peak is found in the fitted graph. The precise position of the peak in the delay dimension is the estimated delay and the precise position of the peak in the Doppler shift dimension is the estimated Doppler shift.

In some implementations, a Doppler shift window of $\pm a$ Hz and/or a delay window of $\pm b$ nanoseconds is considered for estimating the delay and the Doppler shift of the received GNSS signal, wherein $a$ is smaller than 1000, $b$ is smaller than 1000. For example, a Doppler shift window may be $\pm 4$ Hz, and/or a delay window may be $\pm 0.5$ chip duration, which may be roughly $\pm 146$ ns. Estimated delays in such windows would result in accurate pseudoranges calculated using the estimated delays. For example, a window of calculated pseudoranges may be $\pm 9$ meters in a GPS L1 system, or $\pm 2$ meters in a GPS L5 system. As further examples, $a$ may be smaller than 800, 500, 200, 100, 50, or as low as 5, $b$ may be smaller than 800, 500, 200, or as low as 100. Parameters in the DFT computation in step 102 can be set to adjust the Doppler shift window. Delays applied in the correlators can be set to adjust the delay window.

In some implementations, when the estimated delay and the Doppler shift are obtained, the GNSS receiver may use the estimation to correct parameters of a delay and a frequency of the received GNSS signal. The GNSS receiver may apply the corrected parameters to a local oscillator and correlator hardware for tracking the GNSS signal. The corrected parameters may be further used for navigation, e.g., by a navigation engine. The GNSS receiver may estimate at least one of a position, a velocity and a time by using the estimated delay and the estimated Doppler shift.

An accuracy of the estimated delay and the estimated Doppler shift is in a same order of magnitude as an accuracy of a delay and a Doppler shift estimated in a full power mode without reducing power consumption.

In step 105 of method 100, the GNSS receiver reduces power consumption for the rest of the cycle. For example, the GNSS receiver may stop receiving and stop taking a snapshot of the GNSS signal; alternatively or in addition, the GNSS receiver may stop processing snapshots as performed in the duty cycle; alternatively or in addition, the GNSS receiver may stop estimating delays and Doppler shifts as performed in the duty cycle. For reducing power consumption, the GNSS receiver may shut down all or partial of its functionality modules, such as processing or receiving modules.

In some implementations, after step 105, method 100 may be performed continuously in cycles, such that the method starts over with step 101 to receive and process further snapshots in duty cycles and reduce power consumption for the rest of the cycles.

In some implementations, when method 100 is continuously performed in cycles, the GNSS receiver may change the lengths of cycles, or change the lengths of duty cycles. A duration of a duty cycle and correspondingly a duration of a snapshot may be adapted to requirements of signal accumulation given a current signal strength.

In an example embodiment, after step 105, the GNSS receiver may switch to a full power mode. For example, in the full power mode, the GNSS receiver may continuously receive a GNSS signal, process the signal or estimate delay and Doppler shifts of the signal. The GNSS may use a closed phase loop and a closed frequency loop for the estimation. The GNSS receiver may continuously take snapshots of a GNSS signal, process the snapshots and estimate delay and Doppler shifts of the signal.

Figure 4 shows an example of a GNSS receiver 200. GNSS receiver 200 can be configured to perform the various implementations of method 100 as described above.

GNSS receiver 200 comprises a RF front end RFD, a group of correlators CORR and a processing unit PROC. GNSS receiver 200 is configured to operate in a power saving mode. In the power saving mode, the RF front end RFD is configured to receive and take a snapshot of a GNSS signal in a duty cycle. RFD may use an antenna or an antenna array to receive GNSS signals. The correlators CORR are configured to compute, in the duty cycle, respective correlations between the snapshot with different delays of a PRN code sequence. For example, GNSS receiver 200 may comprises $N$ correlators, and the $N$ correlators are configured to apply a same PRN code sequence with $N$ respective delays, as described in method 100. The processing unit PROC is configured to compute, in the duty cycle, respective frequency spectra of the correlations, and estimate a delay and a Doppler shift of the GNSS signal based on the frequency spectra. At least one of the RF front end RFD, the group of correlators CORR and the processing unit PROC is configured to reduce power consumption for the rest of the cycle. An accuracy of the estimated delay and the estimated Doppler shift is in a same order of magnitude as an accuracy of a delay and a Doppler shift estimated in a full power mode in which none of the RF front end RFD, the group of correlators CORR and the processing unit PROC reduces power consumption.

In some implementations, GNSS receiver 200 further comprises a navigation engine (not shown in Figure 4). The navigation engine is configured to estimate at least one of: a position, a velocity and a time using the estimated delay and Doppler shift.

In some implementations, GNSS receiver 200 is further configured to operate in the full power mode. In the full power mode, GNSS receiver 200 may be configured to continuously receive a GNSS signal, process the signal or estimate delay and Doppler shifts of the signal. In the full power mode, the RF front end RFD may be configured to receive and take snapshots of a GNSS signal continuously. In the full power mode, the processing unit PROC may be configured to use a closed phase loop and a closed frequency loop to estimate a delay and a Doppler shift.

In some implementations, the processing unit PROC can be fully implemented in software. In some implementations, the correlators CORR can be implemented in hardware.

Further implementations of GNSS receiver 200 become readily apparent from the various implementations described above in conjunction with the method 100.

In some implementations, a terminal device comprising GNSS receiver 200 may be implemented to perform method 100. Further implementations of the terminal device become readily apparent from the various implementations described above in conjunction with the method 100.

Hence, with the various implementations described above for receiving and processing GNSS signals, a GNSS receiver does not need to continuously operate with full power consumption but can operate in duty cycles and reduce power consumption in the rest of cycles. Estimated delays and Doppler shifts have an accuracy in a same satisfactory level as those obtained with full power consumption. An accurate estimation of delays and Doppler shifts of GNSS signals is achieved with reduced power consumption.

Various embodiments of the improved processing concept for receiving and processing GNSS signals can be implemented in the form of logic in software or hardware or a combination of both. The logic may be stored in a computer readable or machine-readable storage medium as a set of instructions adapted to direct one or more processors of a (distributed) computer system to perform a set of steps disclosed in embodiments of the improved processing concept. The logic may form part of a computer program product adapted to direct an information-processing device to automatically perform a set of steps disclosed in embodiments of the improved processing concept.

The specification and drawings are, accordingly, to be regarded in an illustrative rather than a restrictive sense. However, it will be evident that various modifications and changes may be made thereunto without departing from the scope of the invention as set forth in the claims.

LIST OF REFERENCE SIGNS

| 100 | method |
| 101-105 | steps |
| 200 | GNSS receiver |
| RFD | radio frequency front end |
| CORR | correlators |
| PROC | processing unit |

**Claims**

1. A method for receiving and processing global navigation satellite system, GNSS, signals by a GNSS receiver featuring a power saving mode, the method comprising, in the power saving mode:

- receiving and taking a snapshot of a GNSS signal in a duty cycle, wherein a duration of the duty cycle is between 10 milliseconds and 2000 milliseconds, and the duty cycle is part of a cycle;

- computing, in the duty cycle, respective correlations between the snapshot and different delays of a pseudorandom noise, PRN, code sequence;
- computing, in the duty cycle, respective frequency spectra of the correlations;
- estimating, in the duty cycle, a delay and a Doppler shift of the GNSS signal based on the frequency spectra; and
- reducing power consumption for the rest of the cycle;

wherein an accuracy of the estimated delay and the estimated Doppler shift is in a same order of magnitude as an accuracy of a delay and a Doppler shift estimated in a full power mode without reducing power consumption.

2. The method according claim 1, wherein the cycle is below one second or is a few seconds, and the snapshot and the cycle are set to at least one of:

- a duration of the snapshot is 200ms;
- the duty cycle is between 2% and 20% of the cycle;
- the duty cycle is between 20ms and 500ms.

3. The method according to claim 1 or 2, further comprising estimating at least one of a position, a velocity and a time by using the estimated delay and the estimated Doppler shift.

4. The method according to any one of claims 1 to 3 further comprising adjusting the different delays of the PRN code sequence by using the estimated delay; and/or adjusting an output frequency of a local oscillator of the GNSS receiver by using the estimated Doppler shift.

5. The method according to any of claims 1 to 4, wherein each correlation comprises a length-K sequence in time domain, and computing the respective frequency spectra of the correlations comprises computing a K-point discrete Fourier transform, DFT, of each correlation.

6. The method according to any of claims 1 to 5, wherein estimating the delay and the Doppler shift of the GNSS signal based on the frequency spectra comprises adjusting phases of the frequency spectra and estimating the delay and the Doppler shift using the adjusted frequency spectra.

7. The method according to any of claims 1 to 6, wherein estimating the delay and the Doppler shift of the GNSS signal based on the frequency spectra comprises computing the delay by a code phase discriminator and computing the Doppler shift being at a maximum of a curve fitted to one of the frequency spectra.

8. The method according to any of claims 1 to 6, wherein estimating the delay and the Doppler shift of the GNSS signal based on the frequency spectra comprises computing the delay and the Doppler shift being at a maximum of a two-dimensional graph fitted to the frequency spectra.

9. The method according any of claims 1 to 8, wherein the GNSS receiver further features the full power mode, the method further comprising, in the full power mode, using a closed phase loop and a closed frequency loop to estimate a delay and a Doppler shift.

10. A computer program comprising instructions which, when the program is executed by a global navigation satellite system, GNSS, receiver, causes the GNSS receiver to carry out the method according to any of the preceding claims.

11. A global navigation satellite system, GNSS, receiver comprising a radio frequency, RF, front end, a group of correlators and a processing unit, the GNSS receiver is configured to operate in a power saving mode, wherein in the power saving mode:

- the RF front end is configured to receive and take a snapshot of a GNSS signal in a duty cycle, wherein a duration of the snapshot is between 10 milliseconds and 2000 milliseconds, and the duty cycle is part of a cycle;
- the correlators are configured to compute, in the duty cycle, respective correlations between the snapshot with different delays of a pseudorandom noise, PRN, code sequence;
- the processing unit is configured to compute, in the duty cycle, respective frequency spectra of the correlations, and estimate a delay and a Doppler shift of the GNSS signal based on the frequency spectra; and
- at least one of the RF front end, the group of correlators and the processing unit is further configured to reduce power consumption for the rest of the cycle;

wherein an accuracy of the estimated delay and the estimated Doppler shift is in a same order of magnitude as an accuracy of a delay and a Doppler shift estimated in a full power mode in which none of the RF front end, the group of correlators and the processing unit reduces power consumption.

12. The GNSS receiver according to claim 11 further comprising a navigation engine, wherein the navigation engine is configured to estimate at least one of: a position, a velocity and a time using the estimated delay and Doppler shift.

13. The GNSS receiver according to claim 11 or 12, further configured to operate in the full power mode, wherein in the full power mode, the processing unit is configured to use a closed phase loop and a closed frequency loop to estimate a delay and a Doppler shift.

14. The GNSS receiver according to any of claims 11 to 13, wherein the processing unit is a software-implemented module.

15. A terminal device comprising a GNSS receiver according to any of claims 9 to 14.

# Fig 1

# Fig 2

EP 4 711 821 A1

# Fig 3

# Fig 4

# EUROPEAN SEARCH REPORT

Europäisches
Patentamt
European
Patent Office
Office européen
des brevets

**Application Number**

EP 24 20 0620

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/037650 A1 (LENNEN GARY [US]) 17 February 2011 (2011-02-17) <br> * paragraph [0002] - paragraph [0015] * <br> * paragraph [0020] - paragraph [0022] * <br> * paragraph [0031] - paragraph [0038] * <br> * claims 1-21 * <br> * figures 1-7 * <br> * abstract * <br> ----- | 1-15 | INV. <br> G01S19/30 <br> G01S19/34 |
| A | US 2021/199812 A1 (CHENG ZHENLAN [CH] ET AL) 1 July 2021 (2021-07-01) <br> * paragraph [0016] - paragraph [0021] * <br> * paragraph [0045] - paragraph [0055] * <br> * paragraph [0065] - paragraph [0079] * <br> * figures 1-5 * <br> * abstract * <br> ----- | 1-15 | |
| A | CN 115 267 860 A (PEOPLE'S LIBERATION ARMY NATIONAL UNIVERSITY OF DEFENSE TECHNOLOGY) 1 November 2022 (2022-11-01) <br> * the whole document * <br> ----- | 1-15 | **TECHNICAL FIELDS SEARCHED (IPC)** <br> G01S |
| A | US 2010/103038 A1 (YEH HSIN-CHUNG [TW] ET AL) 29 April 2010 (2010-04-29) <br> * the whole document * <br> ----- | 1-15 | |

The present search report has been drawn up for all claims

| Place of search | Date of completion of the search | Examiner |
|---|---|---|
| Munich | 24 February 2025 | Galmiche, Aurélien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 0620

This annex lists the patent family members relating to the patent documents cited in  the above-mentioned European search report.
The members are as contained in the European Patent Office EDP file on
The European Patent Office is in no way liable for these particulars which are merely given for the purpose of information.

24-02-2025

| Patent document cited in search report | | Publication date | Patent family member(s) | | Publication date |
|---|---|---|---|---|---|
| US 2011037650 | A1 | 17-02-2011 | NONE | | |
| US 2021199812 | A1 | 01-07-2021 | CN | 112166346 A | 01-01-2021 |
| | | | EP | 3785050 A1 | 03-03-2021 |
| | | | US | 2021199812 A1 | 01-07-2021 |
| | | | WO | 2019219218 A1 | 21-11-2019 |
| CN 115267860 | A | 01-11-2022 | NONE | | |
| US 2010103038 | A1 | 29-04-2010 | CN | 101726726 A | 09-06-2010 |
| | | | TW | 201017203 A | 01-05-2010 |
| | | | US | 2010103038 A1 | 29-04-2010 |

EPO FORM P0459

For more details about this annex : see Official Journal of the European Patent Office, No. 12/82